(19) Europäisches Patentamt
European Patent Office
Office européen des brevets

(11) **EP 2 461 572 B1**

(12) **EUROPEAN PATENT SPECIFICATION**

(45) Date of publication and mention
of the grant of the patent:
**10.04.2013 Bulletin 2013/15**

(51) Int Cl.:
**H04N 5/232** (2006.01)   **G02B 7/28** (2006.01)
**G03B 13/36** (2006.01)

(21) Application number: **11191592.2**

(22) Date of filing: **01.12.2011**

(54) **Ranging unit and imaging device**

Entfernungsmessungseinheit und Bildgebungsvorrichtung

Unité d'alignement et dispositif d'imagerie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2010 JP 2010268353**

(43) Date of publication of application:
**06.06.2012 Bulletin 2012/23**

(73) Proprietor: **Ricoh Company, Ltd.**
**Tokyo 143-8555 (JP)**

(72) Inventor: **Kimura, Tomonori**
**Tokyo, 143-8555 (JP)**

(74) Representative: **Leeming, John Gerard**
**J A Kemp**
**14 South Square**
**Gray's Inn**
**London WC1R 5JJ (GB)**

(56) References cited:
**JP-A- 2001 249 267    US-A- 4 178 098**

**Description**

Background of the Invention

The present invention relates to a ranging unit which can correct the timings at which image data are output from each of two range finding image sensors and an imaging device with a hybrid autofocus function comprising such a ranging unit.

Regarding an imaging device such as a compact digital camera, several types of autofocus (AF) functions are known. One of them is a hill-climb autofocus to calculate the contrast values of image data captured via the lenses of an imaging optical system while moving the lenses, to find the focus position having a maximal contrast value. Thus, by moving the lenses to the found position, it is possible to capture a subject in focus. The hill-climb autofocus has however a drawback that using a long focus lens, a range in which the lens is moved is increased, elongating the time taken for finding the lens focus position.

Another type of autofocus is a phase difference detecting autofocus by a range finding optical system. The phase difference detecting autofocus is to calculate a distance to a subject by the range finding optical system with two pairs of image sensors and lenses to find the focus position of an imaging optical system in accordance with the distance. A distance to the subject is measured by calculating a phase difference or parallax in image data on a subject acquired with the two pair of image sensors and lenses. For phase difference calculation, the timings at which the image sensors output image data need to be synchronized. However, this autofocus can find the focus position more quickly than the hill-climb autofocus since it does not need to move the lenses.

On the other hand, there is a drawback that provision of an additional optical system for range finding increases the size of a device and manufacture costs due to difficulty in accurate mechanical alignment of the positions of the two lenses and two image sensors.

In view of solving the problems in the hill-climb and phase difference detecting autofocus, Japanese Patent Application Publication No. 2001-221945 (Reference 1) and No. 2006-072384 (Reference 2) disclose an imaging device having a hybrid autofocus function as a combination of the above two autofocuses, for example.

According to the hybrid autofocus, first, a distance to a subject is roughly calculated by the phase difference detecting autofocus, a focus lens is moved to a certain position according to the calculated distance, and the hill-climb autofocus is performed within a predetermined range around the certain position. Thus, the lens focus position is roughly found by the phase difference detecting autofocus and then accurately detected by the hill-climb autofocus. Therefore, it is possible to reduce the moving amount of the imaging optical system, shorten the time taken for focusing, and achieve accurate focusing even with use of the range finding optical system having a low aligning accuracy.

Reference 1 discloses a hybrid AF type imaging device which includes an AF unit having a range finding optical system to find multiple ranging areas and changes an AF area of hill-climb autofocus in accordance with the multiple ranging areas. Reference 2 discloses an imaging device configured to change an AF area of hill-climb autofocus in line with a distance to a subject. In both the devices, the AF area of hill-climb autofocus needs to be in line with the angle of view of the range finding optical system as a fixed focus.

Further, in recent years the speed-up and improved accuracy of the autofocus function along with a reduction in manufacture costs have been demanded in view of market trend. In order to achieve them with the hybrid AF, the image data output timings of the two different image sensors have to be precisely synchronized, which requires the use of an image sensor with an advanced timing adjusting function or development of a dedicated image sensor. This leads to an increase in the total cost including manufacture and development costs.

It is preferable to use general purpose, low price image sensors which can output image data at the same timing precisely. However, in general image sensors are formed on a semiconductor wafer and cut out therefrom so that image sensors from different semiconductor wafers have different properties. Even ones from the same wafer may have different properties due to some factors such as a difference in electric arrangement which results from a limitation to physical wiring arrangement (circuit board of image sensor, interface FPC, main circuit board or else) for outputting an image signal from the image sensor to an image processing IC which generates image data. The limitation to wiring arrangement refers to, for example, a limitation to the degree of designing freedom for the purpose of downsized and high-density arrangement.

That is, with use of the general purpose image sensors having different properties, they cannot output image data synchronously and a time lag in the image data outputs occurs.

As described above, it is very hard to allow the image data output timings of the two image sensors to completely coincide with each other. This affects the ranging performance and deteriorates the ranging accuracy of the imaging device especially in capturing a subject moving fast. High-speed, high precision AF function with less manufacture and development costs has not been realized.

US 4,178,098 discloses a range detecting method and apparatus in which a first and a second image of an object each having a relative positional parallax corresponding to the object distance formed by a range finding optical system are purely electrically scanned by the use of one or more photosensor arrays and the resulting image scan signals in analog form relating to the first and second images are applied to first and second analog storing devices for storage therein, in which coincidence or non-coincidence between the analog image scan signals is detected by coincidence detecting drive while one of these image scan signals is shifted bit by bit relative to the other image scan signal, thereby counting an amount of shift bits required until the image scan signals of the same bit number relating to the first and second images are rendered most appropriately coincident with each other, whereby the object distance may be known from such amount of shift bits.

JP 2001-249267 discloses an automatic focussing device provided with a lens system including a focus lens for forming an object image on a prescribed position and a zoom lens system, a CCD for imaging the object image inputted through the lens system and outputting the image data, and a CPU for deciding the final focal position based on the detection resource by a CCD-AF and an external AF, and a sampling condition of the CCD-AF is set in accordance with the focal distance of the lens system.

The present invention aims to provide a hybrid AF type ranging unit which comprises two range finding image sensors and a detecting system to detect the timings at which image data are output from each of the two image sensors, to be able to calculate a distance to a subject at higher speed and higher precision by correcting a difference in timing between the image data outputs of the two image sensors.

According to the present invention, there is provided a ranging unit as defined in claim 1.

Features, embodiments, and advantages of the present invention will become apparent from the following detailed description with reference to the accompanying drawings, in which:-

FIG. 1 is a perspective view of an example of an imaging device according to one embodiment of the present invention;
FIG. 2 is a function block diagram of the imaging device by way of example;
FIG. 3 shows the principle of phase difference detecting autofocus;
FIG. 4 is a flowchart for AF processing by the imaging device according to one embodiment of the present invention;
FIG. 5 is a block diagram of an example of a ranging unit according to one embodiment of the present invention
FIG. 6 is a block diagram of the ranging unit in detail in FIG. 5;
FIG. 7 is a block diagram of detailed inner structure of the ranging unit in FIG. 5;
FIG. is a flowchart for image data acquiring processing by the ranging unit;
FIG. 9 is a timing chart for measuring a difference in image data output timing by the ranging unit by way of example;
FIG. 10 is a timing chart for another example of measuring a difference in image data output timing by the ranging unit;
FIG. 11 is a timing chart for still another example of measuring a difference in image data output timing by the ranging unit; and
FIG. 12 is a timing chart for still another example, of measuring a difference in image data output timing by the ranging unit.

Detailed Description of the Preferred Embodiment

Hereinafter, a ranging unit and an imaging device according to embodiments of the present invention will be described in detail with reference to the accompanying drawing. Wherever possible, the same reference numbers will be used throughout the drawings to refer to the same or like parts.

A ranging unit according to one embodiment of the present invention includes two general-purpose image sensors to measure a distance to a subject by a phase difference detecting autofocus using image data output from the two image sensors. For acquiring image data, the ranging unit is configured that an output start signal is transmitted to each image sensor to detect a time lag in from receipt of the signal to output of image data with an image sensor controller. On the basis of the time lag, the timing at which an output start signal is transmitted to each image sensor is adjusted. This makes it possibly to acquire image data by the phase difference detecting autofocus with required precision and improve the accuracy of range finding calculation for the phase difference detecting autofocus.

First Embodiment

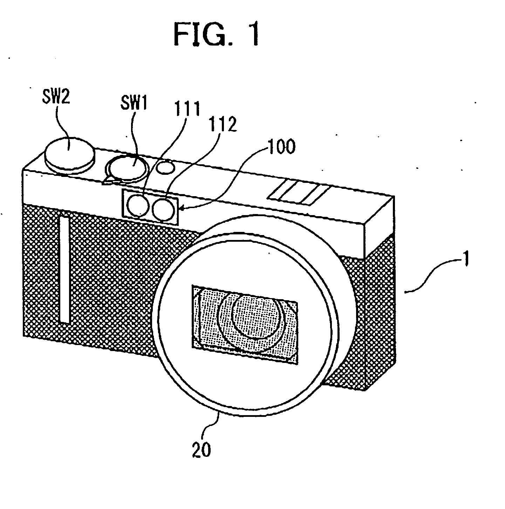

FIG. 1 is a perspective view of an example of imaging device according to the present embodiment. An imaging device 1 includes, on the front face, an imaging optical system 20 including an imaging lens and a focus lens to capture the image of a subject and a ranging unit 100 including a range finding optical system having lenses 111, 112. The imaging optical system 20 and the ranging unit 100 are placed away from each other. The imaging device 1 also includes a shutter button SW1 and a mode dial SW2 to select a mode on the top face. Upon a half-press to the shutter button SW1 including two switches, a first release signal is issued and upon a full press thereto, a second release signal is issued. The imaging device 1 performs autofocus and imaging process to a subject in response to the release signals.

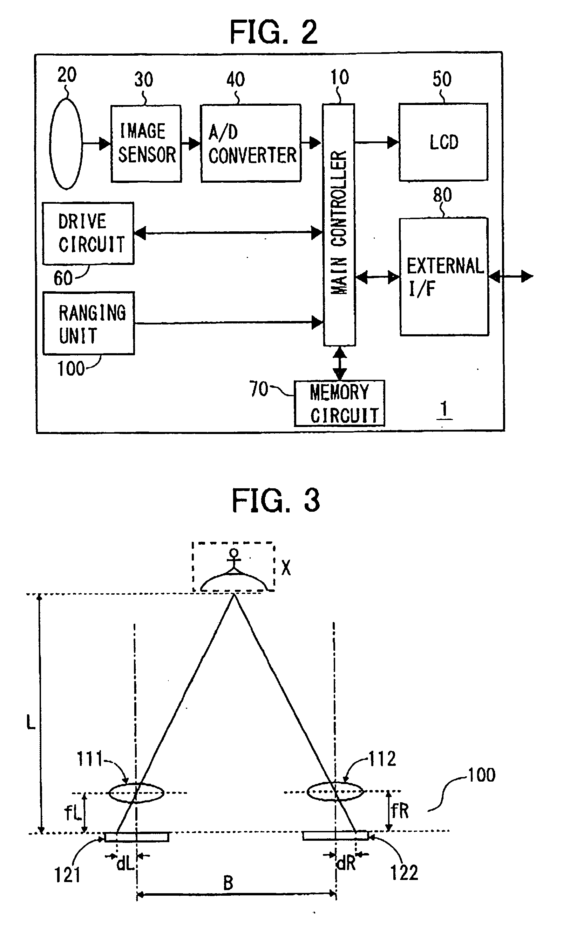

FIG. 2 is a function block diagram of the imaging device 1 by way of example. The imaging device 1 includes a main controller 10, an optical system 20, an image sensor 30, an A/D converter 40, a liquid crystal display 50, an optical system drive circuit 60, a memory circuit 70, an external I/F 80, and the ranging unit 100.

The main controller 10 includes a CPU and peripheral circuits for various mechanical and electric controls over the operation of the device, image processing, display operation, memory operation, and data communication via the external interface.

The optical system 20 forms an image of a subject on the image sensor 3 0. The image sensor 30 converts the image into an electric image signal. The A/D converter 40 converts an analog electric image signal from the image sensor 30 to a digital signal.

The main controller 10 performs predetermined image processing to the digital image signal converted by the A/D converter 40 and allows it to be displayed on the LCD 50 when needed. The optical system drive circuit 60 is controlled by the main controller 10 to drive the optical system 20 along the optical axis for focus adjustment.

The ranging unit 100 is configured to measure a distance to a subject by the phase difference detecting autofocus.

The imaging device 1 also has a focus detecting function in which a focus state is detected by contrast analysis on the basis of image data received from the image sensor 30. The memory circuit 70 includes a RAM and a ROM to store various data such as image data processed by the controller 10, interim data related to the operation of the controller 10, and captured image data.

The controller 10 also includes a memory controller for an external memory device to read/write data from/to the external memory device via the external I/F 80. In shooting a subject, the controller 10 allows the LCD 50 to display a subject image acquired via the optical system 20, image sensor 30, and A/D converter 40. Although not shown, the image sensor 30, A/D converter 40, and LCD 50 are controlled by the controller 10.

Further, the main controller 10 controls the optical system drive circuit 60 to move the imaging lens to a predetermined position on the basis of the distance calculated by the ranging unit 100, and moves the imaging lens in a predetermined area to acquire and analyze contrast data. Thus, it realizes the hybrid autofocus function.

The main controller 10 performs AF processing in a predetermined cycle. It starts a new AF processing upon issuance of the first release signal and holds a result of the processing while the first release signal is issued or the shutter button SW1 is half-pressed. When the shutter button SW1 is released, the main controller 10 returns to the AF processing in a predetermined cycle. Upon a full press to the shutter button SW1 and issuance of the second release signal, the main controller 10 stores image data in the memory circuit 70, displays an image check screen or the like on the LCD 50 and transfers image data to the external memory device via the external I/F 80.

Next, an example of the phase difference detecting autofocus of the ranging unit 100 is described with reference to FIG. 3. FIG, 3 only shows the ranging unit 100 with two imaging lenses 111, 112 and two image sensors 121, 122 facing the lenses respectively, and a subject X when the imaging device 1 is seen from the top. The rest of the elements are omitted from the drawing.

In FIG. 3 the distance between the first and second lenses 111, 112 is set to a base length B and the focal length of the first lens 111 is fL and that of the second lens 112 is fR. Since the focal lengths fL and fR are equal, the focal length of the two lenses is assumed to be "f". When an image is formed via the first lens 111 at a position dL relative to the base length B on the first image sensor 121 and an image is formed via the second lens 112 at a position dR relative to the base length B on the second image sensor 122, a distance to the subject X is calculated by the following equation:

$$L = \{(B + dL + dR) * f\} / (dL + dR)$$

Thus, by measuring dL and dR relative to the base length B, a distance L to the subject X can be calculated. The protruding amount of the imaging lens in line with the distance L is found by referring to adjustment coefficients calculated and pre-stored in the memory circuit 70. The base length B has to be at least 6mm or more with the size of the imaging device and the specification of the image sensors taken into account.

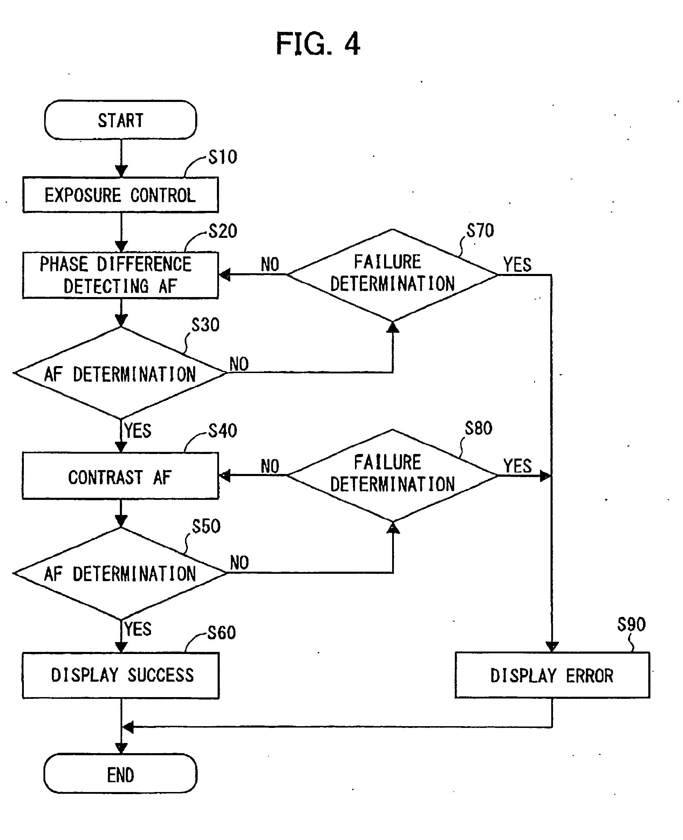

Next, the flow of the AF processing of the imaging device 1 is described with reference to FIG. 4. The AF processing according to the present embodiment is a hill-climb autofocus to detect focus positions with high precision after the rough range finding by the phase difference detecting autofocus.

The AF processing starts upon a half-press to the shutter button SW1 and the issuance of the first release signal. In step S10 exposure is controlled. In step S20 phase difference detecting autofocus is executed. In step S30 the result of the AF processing is determined. When the result is a failure (No in step S30), a failure determination is made on whether to re-execute or complete the AF processing in step S70. When re-execution of the AF processing is determined (No in step S70), the flow returns to step S20. When completion of the AF processing is determined (Yes in step S70), an error message that autofocus has failed is displayed on the LCD 50 in step S90 and the process is completed, The error message can be surrounded with a red frame on the LCD 50, for example.

When the result is a success (Yes in step S30), hill-climb autofocus is performed in the periphery of the lens position in accordance with the calculated distance by the phase difference detecting autofocus in step S40. Then, in step S50 a result of the hill-climb autofocus is determined. When the result is a focus failure (No in step S50), in step S80 a failure determination is made on whether or not to re-execute or complete the hull-climb AF processing. When re-execution of the AF processing is determined (No in step S80), the flow returns to step S40. When completion of the AF processing is determined (Yes in step S80), an error message that autofocus has failed is displayed on the LCD 50 in step S90 and the process is completed. The error message can be surrounded with a red frame on the LCD 50, for example.

When the result is a success in autofocus (Yes in step S50), a message that autofocus has succeeded is displayed on the LCD 50 in step S60. The message can be surrounded with a green frame on the LCD 50, for example.

The error message in step S90 can be arbitrarily formed. For example, it can be surrounded with a different color frame or a different mark, or can be blinked or indicated with a design or a pattern.

Second Embodiment

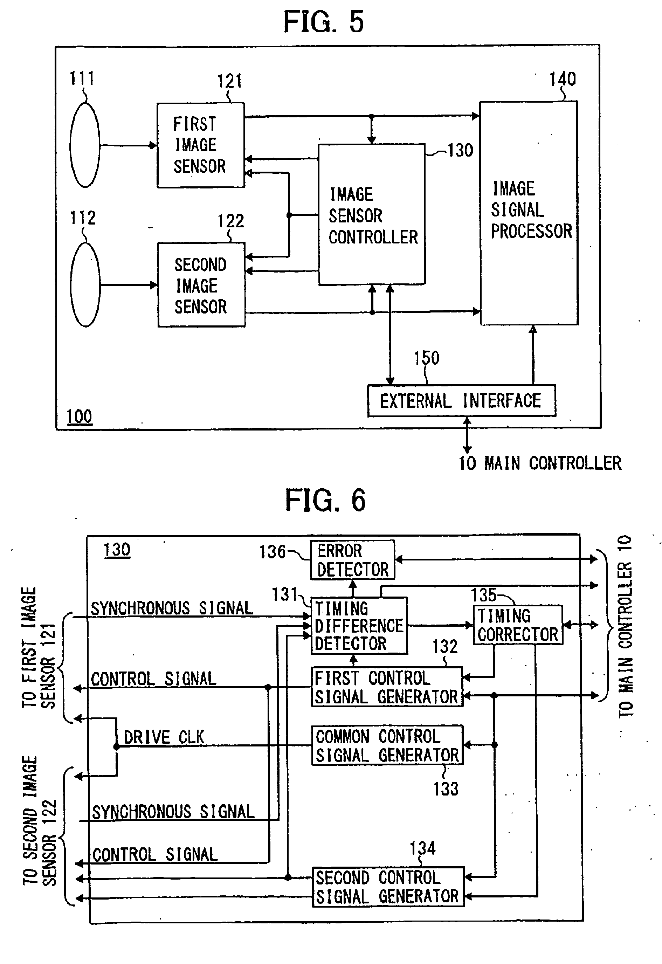

Next, an example of the ranging unit according to the present embodiments is described with reference to FIG. 5. The ranging unit 100 includes the first and second lenses 111, 112 through which incident light from a subject is imaged, the first and second image sensors 121, 122 on which photoelectric conversion elements are arranged in matrix to accumulate charges in line with an optical image, an image sensor controller 130 to control the image sensors 121, 122, an image signal processor 140 to measure a distance to the subject using parallax information of the image data from the first and second image sensors 121, 122, and an external interface 150 used for data communication with the main controller 10 in FIG. 2.

Upon detecting an image input error by an error signal from the image sensor controller 130, the ranging unit 100 receives an error result from the image signal processor 140 and transmits it to the main controller 10 via the external interface 150. The external interface 150 is preferably a general purpose interface such as serial communication or a local bus, The image sensor controller 130 and the image signal processor 140 can be placed in the same IC chip or included in the main controller 10.

The image sensor controller 130 is described in detail referring to FIG. 6. The image sensor controller 130 includes a first control signal generator 132 and a second control signal generator 134 to generate first and second control signals necessary for driving the first and second image sensors 121, 122, respectively, in response to an instruction from the main controller 10, a timing difference detector 131 to detect a difference in timing at which the first and second image sensors 121, 122 each output image data, a common control signal generator 133 to supply common drive clocks to the first and second image sensors 121, 122 in response to an instruction from the main controller 10, a timing corrector 135 to correct the timing difference calculated by the timing difference detector 131 in response to an instruction from the main controller 10, and an error detector 136 to allow a host side to issue an interrupt output when the timing difference calculated by the timing difference detector 131 is larger than an instructed value from the main controller 10. How the image data output timing is measured is described later.

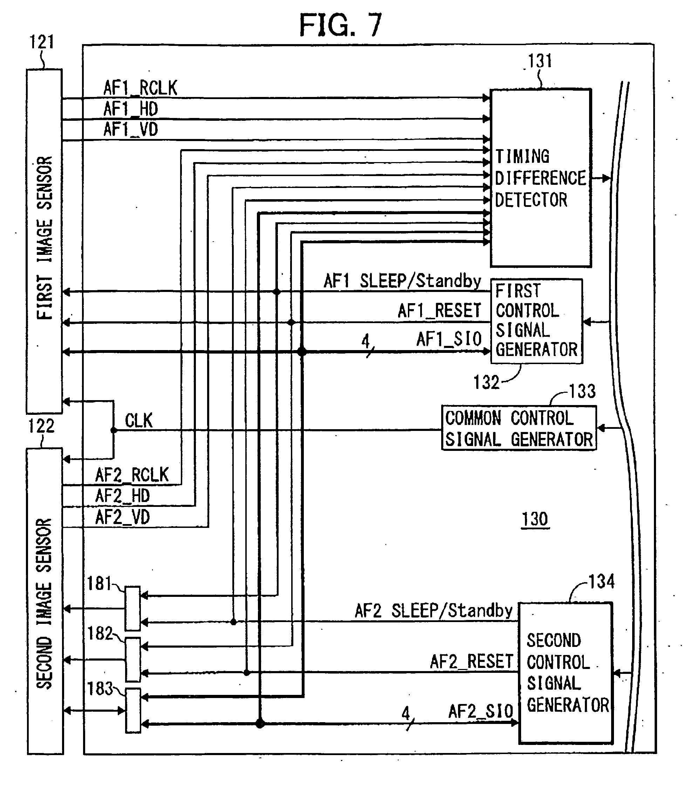

Now, the connection between the image sensor controller 130 and the first and second image sensors 121, 122 is described with reference to FIG. 7.

The first image sensor 121 is driven by a control signal from the first control signal generator 132 while the second image sensor 122 is driven by a control signal from the control signal generator 132 or the second control signal generator 134.

The image data output timing of the first image sensor 121 can be acquired by measuring a time from a second image sensor's start of outputting image data to a first image sensor' s start of outputting image data in response to the control signal as output start signal.

Similarly, the image data output timing of the second image sensor 122 can' be acquired by measuring a time from the first image sensor's start of outputting image data to a second image sensors' s start of outputting image data in response to an output start signal.

Between the first and second control-signal generators 132, 134 and the second image sensor 122, selectors 181 to 183 are disposed to allow both the first and second control signal generators 132, 134 to transmit control signals to the second image sensor 122.

Further, the first and second image sensors generate synchronous output signals and supply them to the timing difference detector 131. Thereby, the timing difference detector 131 sets either of the output timings of the first and second image sensors as a reference and calculates a difference in the timing between the image data outputs of the two image sensors. This makes it possible to correct the timing difference due to a delay in data output of any of the first and second image sensors.

In the present embodiment a necessary frame rate is set to 30 fps (30 frames per second) or more under a normal light amount and to 5 fps (5 frames per second) in a dark condition.

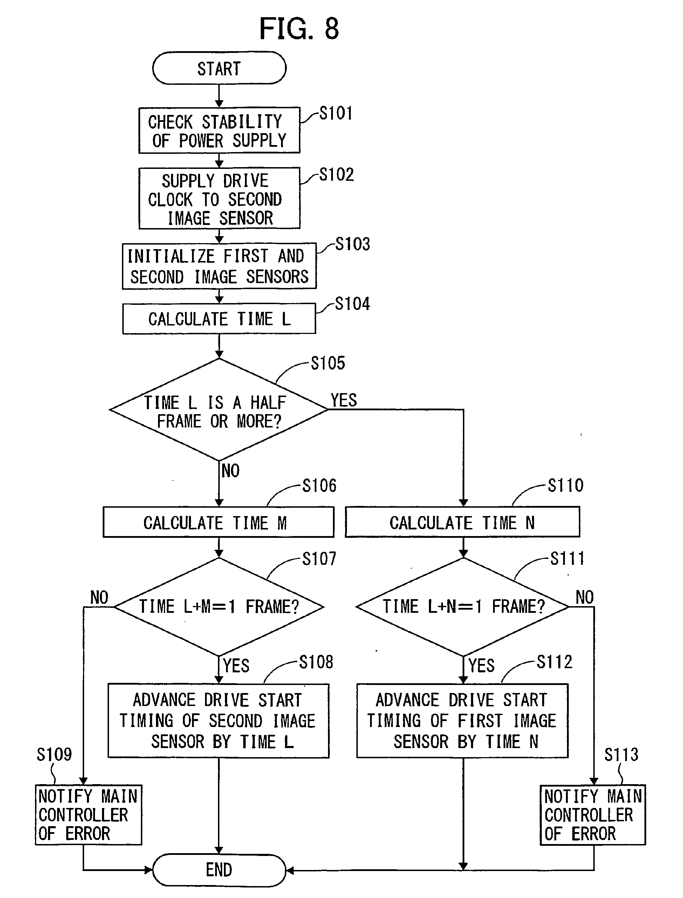

Next, the correction process for the image data output timing of the first and second image sensors is described referring to FIG. 8. The maximal value of the timing difference is assumed to be a half frame as the unit of image data output and can be set by a not-shown external register.

At power-on, the imaging device is boosted and the main controller 10 checks the stability of power supply to the respective elements in step S101. The common control signal generator 133 supplies drive clocks common to the first and second image sensors 121, 122 in step S102. In step S103 the first and second image sensors 121, 122 are initialized.

In step S104 the first image sensor 121 is set as a reference, the first and second image sensors 121, 122 are driven by a control signal as output start signal from the first control signal generator 132, and a time L is calculated. The time L is a length of time from the first image sensor's start of outputting image data to the second image sensor's start of outputting image data. The time L can be calculated by measuring a difference in timing at which vertical synchronous signals are output from the first and second image sensors 121, 122.

In step S105 a determination is made on whether or not the time L is a half frame or more. When the time L is shorter than a half frame (No in step S105), the second image sensor 122 is set as a reference and a time M is calculated in step S106. The time M is a length of time from the second image sensor's start of outputting image data to the first image sensor's start of outputting image data.

In step S107 a determination is made on whether or not the sum of the times L and M is equal to 1 frame. When the sum is 1 frame (Yes in step S107), the first image and second image sensors 121, 122 are determined to normally operate and the values of the times L and M are determined to be valid. It is determined that the second image sensor 122 delays in image data output frog the first image sensor 121. The drive start timing of the second image sensor is adjusted to advance by the time L in step S108. Thus, the image data output timings of the first and second image sensors 121, 122 coincide with each other.

When the sum is less than 1 frame (No in step S107), the occurrence of an error that the output of the synchronous signal from either the first or second image sensor has failed, the setting of the frame rate is varied or the like is notified to the main controller 10 in step S109.

Further, when the time L is a half frame or more (Yes in step S105), the second image sensor 122 is set as a reference and a time N is calculated in step S110. The time N is a length of time from the second image sensor's start of outputting image data to the first image sensor's start of outputting image data in response to the output start signals from the first control signal generator 132.

In step S111 a determination is made on whether or not the sum of the times L and N is equal to 1 frame. When the sum is 1 frame (Yes in step S111), the first image and second image sensors 121, 122 are determined to normally operate and the values of the times L and N are determined to be valid. It is determined that the first image sensor 121 delays in image data output from the second image sensor 122. The drive start timing of the first image sensor 121 is adjusted to advance by the time N in step S112. Thus, the image data output timings of the first and second image sensors 121, 122 are made coincident with each other.

When the sum is not 1 frame (No in step S111), the occurrence of an error that the output of the synchronous signal from either the first or second image sensor has failed, the setting of the frame rate is varied or the like is notified to the main controller 10 in steps 113.

Here, the timing difference detector 131 detects the timing difference in image output and the timing corrector 135 corrects a difference in drive timing of the first and second image sensors 121, 122 in accordance with the detected difference in the output timing.

Although not shown, the value of the time L can be held as a register value and input or changed from the outside. The main controller 10 performs the total control of the ranging unit 100.

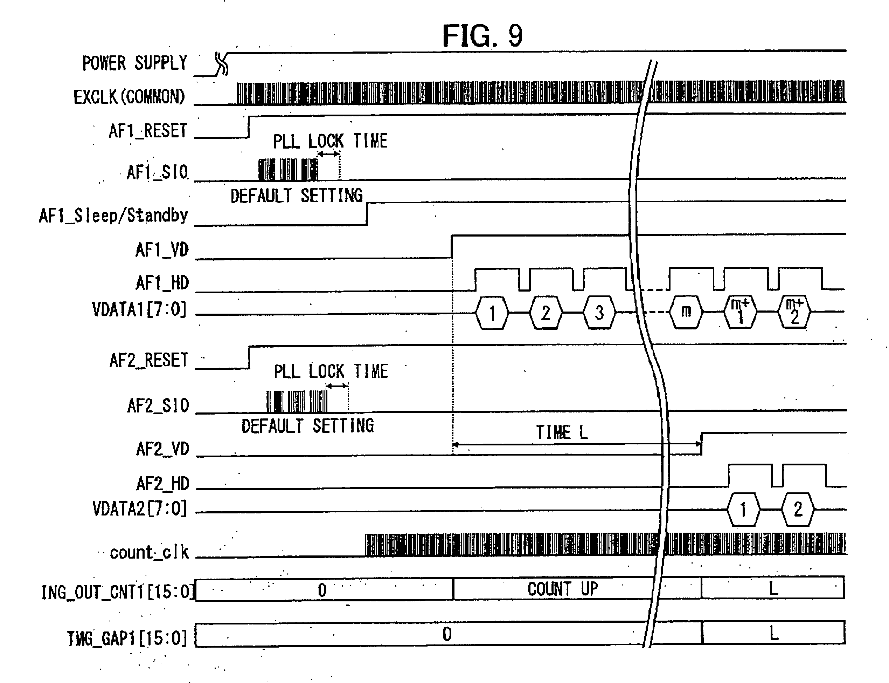

Next, an example of the calculation of the image data output timing of the second image sensor 122 when the first image sensor 121 is set as a reference is described with reference to FIG. 9. Note that a common sleep release signal AF1_Sleep/Standby is the control signal to start the driving of the first and second image sensors 121, 122 and it is set to active-high in FIG. 9. Although not shown, the common control signal generator 133 supplies drive clocks to the first and second image sensors 121, 122 after the main controller 10 confirms the stability of the power supplies.

When the main controller 10 gives an instruction to calculate the timing difference, reset cancel is conducted first and the first image sensor 121 is initialized by an AF1_SIO signal and the second image sensor 122 is initialized by an AF2_SIO signal. Then, the sleep release signal AF1_Sleep/Standby is activated to activate a vertical synchronous signal AF1_VD of the first image sensor 121. The value of a register IMG_OUT_CNT1 is counted up using a clock count_clk to measure the time L from the activation of the vertical synchronous signal of the first image sensor 121 to the activation of the vertical synchronous signal AF2_VD of the second image sensor 122.

The control signal to start the driving of the first and second image sensors 121, 122 can be a reset cancel signal or an SIO signal in replace of the sleep release signal. In this case the main controller 10 can be configured to notify the timing difference detector 131 of which signal is used to start the driving of the first and second image sensors 121, and start counting by the clock count_clk.

Further, it can be configured that data indicating that the control signal to start the driving is active high or active low, or an SIO signal is stored in the register and changeable from the outside. The registers IMG_OUT_CNT [15:0] and TMP_GAP [15:0'] are cleared at appropriate timing.

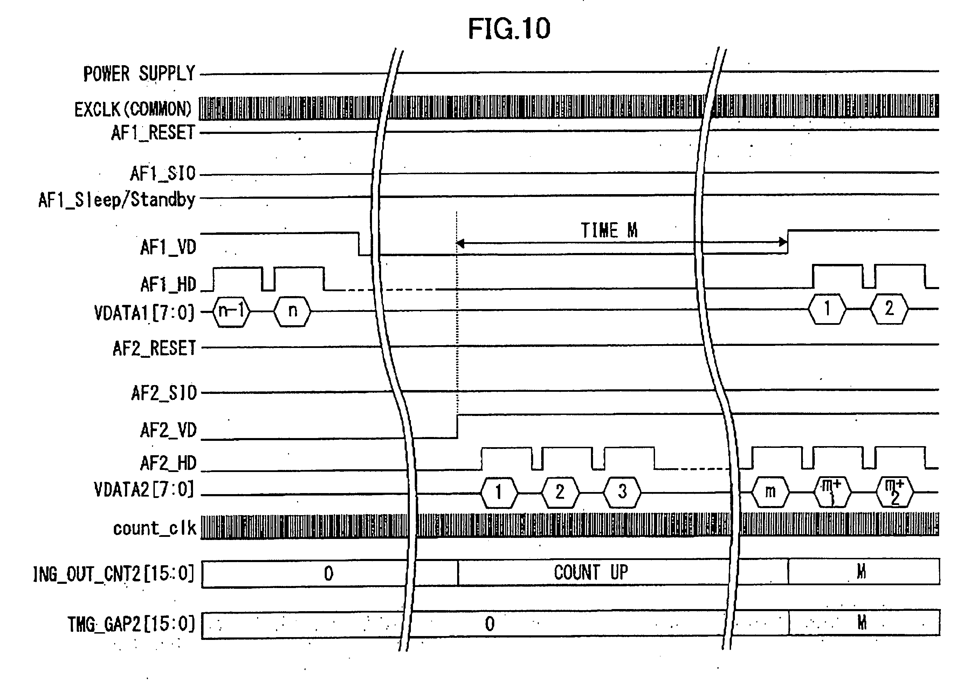

Now, an example of the calculation of the image data output timing of the second image sensor 122 when the time L is a half frame or less is described with reference to FIG. 10. Using the second image sensor 122 as a reference, the value of the register IMG_OUT_CNT1 is counted up using the clock count_clk to measure the time M from the activation of the vertical synchronous signal AF2_VD of the second image sensor 122 to the activation of the vertical synchronous signal AF1_VD of the first image sensor 121.

With the sum of the times L and N being equal to 1 frame, the first image and second image sensors 121, 122 are determined to normally operate and the values of the times L and M are determined to be valid. It is determined that the second image sensor 122 delays in the image data output from the first image sensor 121 and the delay is corrected. With the sum of the times L and N being not equal to 1 frame, the occurrence of an error that the output of the synchronous signal from either the first or second image sensor has failed, the setting of the frame rate is varied or the like is notified to the main controller 10.

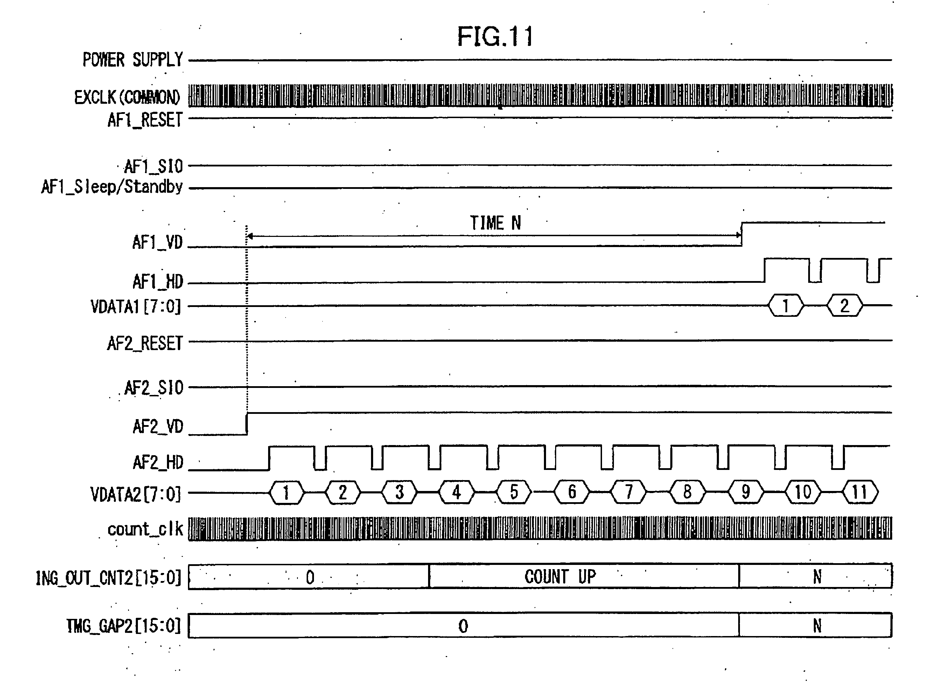

Further, an example of the calculation of the image data output timing of the first image sensor 122 when the time L is a half frame or more is described with reference to FIG. 11. Using the second image sensor 122 as a reference, the value of the register IMG_OUT_CNT1 is counted up using the clock count_clk to measure the time N from the activation of the vertical synchronous signal AF2_VD of the second image sensor 122 to the activation of the vertical synchronous signal AF1_VD of the first image sensor 121.

With the sum of the times L and M being equal to 1 frame, the first image and second image sensors 121, 122 are determined to normally operate and the values of the times L and N are determined to be valid. A delay in the image data output of the first image sensor 121 from the second image sensor 122 is corrected. With the sum of the times L and M being not equal to 1 frame, the occurrence of an error that the output of the synchronous signal from either the first or second image sensor has failed, the setting of the frame rate is varied or the like is notified to the main controller 10.

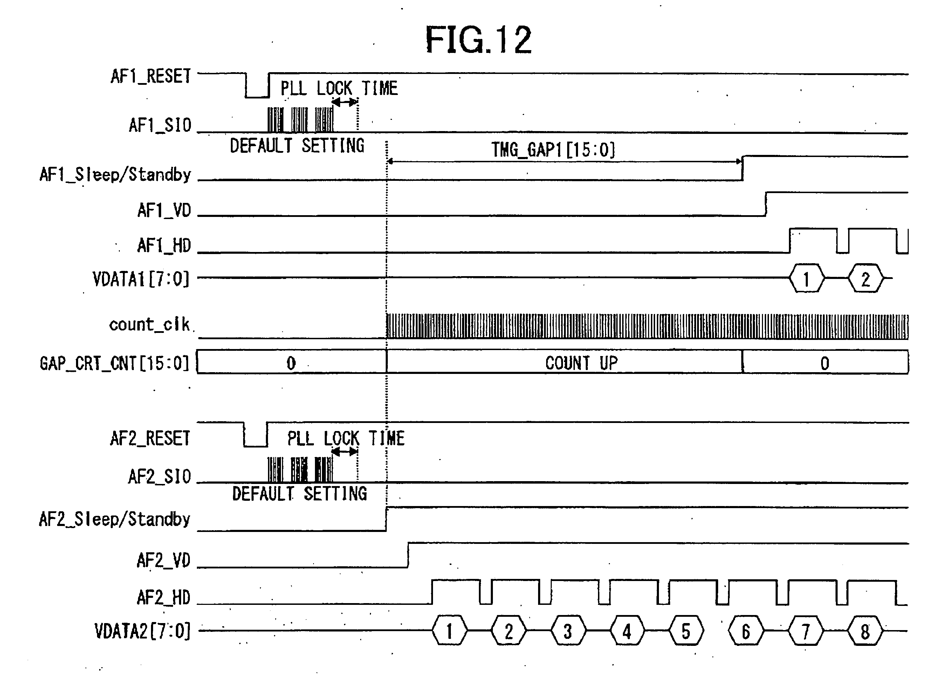

Next, an example of the correction of the image data output timings of the first and second image sensors is described with reference to FIG. 12. In FIG. 12 the control signals to start the driving of the first and second image sensors 121, 122 are sleep release signals AFI_Sleep/Standby, AF2_Sleep/Standby which are set to active-high, As in FIG. 9, the time L or time N is held in the register after the timing difference is calculated, In this example the timing difference between the first and second image sensors 121, 122 is shorter than a half frame and the second image sensor delays in the image data output from the first image sensor 121 by the time L. The value of the time L is held in the register TMG_GAP1.

The first image sensor 121 is supplied with a control signal from the first control signal generator 132 while the second image sensor 122 is supplied with a control signal from the second control signal generator 134. The first image sensor 121 is initialized by a reset signal AF1_RESET and a SIO signal AFI_SIO. The second image sensor 121 is initialized by a reset signal AF2_RESET and a SIO signal AF2_SIO.

After the initialization of the first and second image sensors, the second image sensor 122 is driven by a control signal, and the time is counted using the register OAP_CRT_CNT and the clock count_clk. An output start signal is supplied to the first image sensor 121 when the value of the register GAP_CRT_CNT exceeds the value as the time L held in the register TMG_GAP1. Thus, it is made possible to adjust the timing at which the image sensors output image data by correcting the timing for supplying the control signal to either of the image sensors in accordance with the calculated timing difference.

Although not shown, another example of the timing difference correction is described, in which a difference in image data output timing between the first and second image sensors is a half frame or more and the first image sensor 121 delays in the image data output from the second image sensor 122 by the time N. The value of the time N is held in the register TMG_GAP2.

After the initialization of the first and second image sensors, the first image sensor 121 is driven by an output start signal, and the time is counted using the register GAP_CRT_CNT and the clock signal count_clk. An output start signal is supplied to the second image sensor 122 when the value of the register GAP_CRT_CNT exceeds the value as the time N held in the register TMG_GAP2. Thus, it is made possible to adjust the timing at which the image sensors output image data by correcting the timing for supplying the control signal to either of the image sensors in accordance with the calculated timing difference.

As described above, the imaging device according to one embodiment of the present invention is configured that the two image sensors 121, 122 are connected by wiring with a host side as the main controller 10 to calculate a distance to a target on the basis of a phase difference in the image data from the first and second image sensors 121, 122. The controller can detect a timing difference in the image output of the two image sensors which occurs due to various actors, and adjust the timing at which output start signals are supplied to the two image sensors according to the detected timing difference. As a result, it can accurately synchronize image data used for the calculation of parallax.

Thus, the imaging device according to the above embodiments is configured to concurrently supply control signals to the two range finding image sensors and thereby calculate their response times as image data output timing. Thereby, it can properly, accurately instruct each of the two image sensors to output image data even if the image sensors are of a general-purpose type having a difference or variation in property due to a manufacturing process or wiring arrangement. This can improve the precision of synchronization of image data used for calculating a distance to the target by the phase difference detecting autofocus. Moreover, along with an improvement in the accuracy of calculated distances, the speed and precision of the entire AF processing can be improved.

Further, the two image sensors are supplied with triggers for the image output in accordance with a difference in their detected output timings, to correct the difference. Because of this, the imaging device can accurately calculate a focal length at a higher speed.

Although the present invention has been described in terms of exemplary embodiments, it is not limited thereto. It should be appreciated that variations or modifications may be made in the embodiments described by persons skilled in the art without departing from the scope of the present invention as defined by the following claims.

## Claims

1. A ranging unit (100) comprising:

   a first lens and a second lens (111, 112) adapted to image an incident light beam from a target subject;
   a first image sensor and a second image sensor (121, 122) each adapted to output an image signal in accordance with an image of the subject formed by the first lens and the second lens (111, 112) respectively;
   an image signal processor (140) adapted to calculate a distance to the target subject using image signals output from the first and second image sensors (121, 122);
   an image sensor controller (130) adapted to generate a first control signal to control the first and second image sensors (121, 122) to drive, and a second control signal to control the second image sensor (122) to drive;
   a selector circuit (181-183) adapted to selectively output the first and second control signals to the second image sensor (122);
   a time counter (131) adapted to measure a first period of time and a second period of time when the first and second image sensors (121, 122) are driven by the first control signal, the first period of time being from when the first image sensor (121) starts outputting in response to the first control signal to when the second image sensor (122) starts outputting in response to the first control signal, the second period of time being from when the second image sensor (122) starts outputting in response to the first control signal to when the first image sensor (121) starts outputting in response to the first control signal; and
   a timing corrector (135) adapted to determine, in accordance with the first and second periods of time measured by the time counter (131), the timing at which the first and second image sensors (121, 122) are driven, wherein the selector circuit (181-183) is set to output the second control signal to the second image sensor (121) at the determined drive timing so that the timings at which the first and second image sensors (121, 122) output the image signals coincide with each other.

2. A ranging unit (100) according to claim 1, further comprising
   a determiner (10) adapted to determine whether or not the first and second periods of time measured by the time counter (131) are equal to or more than a certain value relative to a unit of image transfer, wherein
   the timing corrector (135) decides which one of the first and second image sensors (121, 122) is set as a reference in accordance with a result of the determination by the determiner (10), to determine the timing at which the other image sensor starts driving.

3. A ranging unit (100) according to claim 1 or claim 2, further comprising
   a memory (70) in which a difference in the drive timings of the first and second image sensors (121, 122) are stored in advance.

4. A ranging unit (100) according to any one of claims 1 to 3, wherein
   the first and second control signals are selectively changeable to any of a sleep release signal, a standby signal, a reset signal and an SIO command.

5. A ranging unit (100) according to any one of claims 1 to 3, wherein
   the first and second control signals are selectively set to either active-high or active-low.

6. A ranging unit (100) according to any one of claims 1 to 3, wherein:

the image signal processor (140) issues an error when a timing difference in the image output of the first and second image sensors (121, 122) is equal to or larger than a certain value;
at the issuance of an error, an error detection value can be designated from exterior.

7. An imaging device (100) comprising:

the ranging unit (100) according to any one of claims 1 to 6;
an optical system (20) adapted to image a subject; and
an image sensor (30) adapted to convert an optical image obtained by the optical system (20) into an electric signal.

**Patentansprüche**

1. Entfernungsmessungseinrichtung (100), die aufweist:

eine erste Linse und eine zweite Linse (111, 112), die angepasst sind, um einen einfallenden Lichtstrahl von einem Zielsubjekt abzubilden;
einen ersten Bildsensor und einen zweiten Bildsensor (121, 122), die jeweils angepasst sind, um ein Bildsignal gemäß einem Bild von dem Subjekt auszugeben, das durch die erste Linse bzw. die zweite Linse (111, 112) ausgebildet wird;
einen Bildsignalprozessor (140), der angepasst ist, um einen Abstand zu dem Zielobjekt unter Verwendung des Bildsignalausgangs von dem ersten und dem zweiten Bildsensor (121, 122) zu berechnen;
eine Bildsensorsteuerung (130), die angepasst ist, um ein erstes Steuersignal, um den ersten und den zweiten Bildsensor (121, 122) zum Betreiben zu steuern und ein zweites Steuersignal zu erzeugen, um den zweiten Bildsensor (122) zum Betreiben zu steuern;
eine Auswahlschaltung (181-183), die angepasst ist, um wahlweise das erste und das zweite Steuersignal zu dem zweiten Bildsensor (122) auszugeben;
eine Zeitzähleinrichtung (131) die angepasst ist, um eine erste Zeitdauer und eine zweite Zeitdauer zu messen, wenn der erste und der zweite Bildsensor (121, 122) durch das erste Steuersignal betrieben werden, wobei die erste Zeitdauer von dann ist, wenn der erste Bildsensor (121) beginnt, in Reaktion auf das erste Steuersignal auszugeben, bis dann, wenn der zweite Bildsensor (122) beginnt in Reaktion auf das erste Steuersignal auszugeben, wobei die zweite Zeitdauer von dann ist, wenn der zweite Bildsensor (122) beginnt, in Reaktion auf das erste Steuersignal auszugeben, bis dann, wenn der erste Bildsensor (121) beginnt, in Reaktion auf das erste Steuersignal auszugeben; und
eine Zeitsteuerungs- bzw. Zeitmessungskorrektureinrichtung (135), die angepasst ist, um gemäß der ersten und der zweiten Zeitdauer, die von der Zeitzähleinrichtung (131) gemessen werden, die Zeitabstimmung bzw. Zeitsteuerung zu bestimmen, bei welcher der erste und zweite Bildsensor (121, 122) betrieben werden, wobei die Auswählschaltung (181-183) eingestellt ist, um das zweite Steuersignal zu dem zweiten Bildsensor (121) zu der bestimmten Betriebssteuerzeit auszugeben, so dass die Zeitsteuerungen zu welchen der erste und zweite Bildsensor (121, 122) die Bildsignale ausgeben, miteinander zusammenfallen bzw. koinzidieren.

2. Entfernungsmessungseinrichtung (100) nach Anspruch 1, die ferner aufweist,
eine Bestimmungseinrichtung (10), die angepasst ist, um zu bestimmen, ob die erste und zweite Zeitdauer, die durch die Zeitzähleinrichtung (131) gemessen werden, gleich zueinander sind oder mehr als einen bestimmten Wert relativ zu einer Einheit der Bildübertragung betragen oder nicht, wobei
die Zeitkorrektureinrichtung (135) entscheidet, welcher von dem ersten und zweiten Bildsensor (121, 122) als Referenz eingestellt wird gemäß einem Ergebnis der Bestimmung durch die Bestimmungseinrichtung (10), um die Zeitsteuerung zu bestimmen, bei welcher der andere Bildsensor mit dem Betrieb beginnt.

3. Entfernungsmessungseinrichtung (100) nach Anspruch 1 oder Anspruch 2, die ferner aufweist,
einen Speicher (70), in welchem eine Differenz in den Betriebszeitsteuerungen des ersten und des zweiten Bildsensors (121, 122) im Voraus gespeichert wird.

4. Entfernungsmessungseinrichtung (100) nach irgendeinem der Ansprüche 1 bis 3, wobei,
das erste und zweite Steuersignal wahlweise zu irgendeinem Ruheauslössignal, einem Bereitschaftssignal, einem Rücksetzsignal und einem SIO-Befehl änderbar sind.

5. Entfernungsmessungseinrichtung (100) gemäß irgendeinem der Ansprüche 1 bis 3, wobei das erste und das zweite Steuersignal wahlweise entweder auf aktiv hoch oder aktiv niedrig gesetzt werden.

6. Entfernungsmessungseinrichtung (100) nach irgendeinem der Ansprüche 1 bis 3, wobei
   der Bildsignalprozessor (41) ein Fehlersignal ausgibt, wenn eine Zeitsteuerungsdifferenz einer Bildausgabe des ersten und zweiten Bildsensors (121, 122) gleich oder größer als ein bestimmter Wert ist;
   bei der Ausgabe von einem Fehlersignal ein Fehlererfassungswert von außen benannt werden kann.

7. Abbildungsvorrichtung (100), die aufweist:

   die Entfernungsmessungseinrichtung (100) gemäß irgendeinem der Ansprüche 1 bis 6,
   ein optisches System (20), das angepasst ist, um ein Subjekt abzubilden, und
   einen Bildsensor (30), der angepasst ist, um ein optisches Bild, das durch das optische System (20) erhalten worden ist, in ein elektrisches Signal zu wandeln.

## Revendications

1. Unité d'alignement (100) qui comprend :

   une première lentille et une seconde lentille (111, 112) adaptées pour imager un faisceau de lumière incident provenant d'un sujet cible ;
   un premier détecteur d'image et un second détecteur d'image (121, 122) chacun adaptés pour fournir un signal d'image selon une image dudit sujet formée par ladite première lentille et ladite seconde lentille (111, 112) respectivement ;
   un processeur de signal d'image (140) adapté pour calculer une distance par rapport audit sujet cible en utilisant les signaux d'image fournis par lesdits premier et second détecteurs d'image (121, 122) ;
   un contrôleur de détecteur d'image (130) adapté pour générer un premier signal de commande destiné à contrôler lesdits premier et second détecteurs d'image (121, 122) à entraîner, et un second signal de commande destiné à contrôler ledit second détecteur d'image (122) à entraîner ;
   un circuit de sélection (181-183) adapté pour fournir sélectivement lesdits premier et second signaux de commande audit second détecteur d'image (122) ;
   un compteur (131) adapté pour mesurer une première durée et une seconde durée pendant lesquelles lesdits premier et seconds détecteurs d'image (121, 122) sont entraînés par ledit premier signal de commande, ladite première durée allant du moment auquel ledit premier détecteur d'image (121) se met à fonctionner en réponse audit premier signal de commande au moment auquel ledit second détecteur d'image (122) se met à fonctionner en réponse audit premier signal de commande, ladite seconde durée allant du moment auquel ledit second détecteur d'image (122) se met à fonctionner en réponse audit premier signal de commande au moment auquel ledit premier détecteur d'image (121) se met à fonctionner en réponse audit premier signal de commande ; et
   un correcteur de synchronisation (135) adapté pour déterminer, selon lesdites première et seconde durées mesurées par ledit compteur (131), le moment auquel lesdits premier et second détecteurs d'image (121, 122) sont entraînés, dans laquelle
   ledit circuit de sélection (181-183) est réglé pour fournir ledit second signal de commande audit second détecteur d'image (121) au moment d'entraînement déterminé afin que les moments auxquels lesdits premier et second détecteurs d'image (121, 122) fournissent lesdits signaux d'image coïncident.

2. Unité d'alignement (100) selon la revendication 1, qui comprend en outre
   un déterminateur (10) adapté pour déterminer si lesdites première et seconde durées mesurées par ledit compteur (131) sont égales ou supérieures à une certaine valeur par rapport à une unité de transfert d'image, dans laquelle ledit correcteur de synchronisation (135) choisit lequel desdits premier et second détecteurs d'image (121, 122) est défini comme référence selon un résultat de la détermination par ledit déterminateur (10), afin de déterminer le moment auquel l'autre détecteur d'image commence à être entraîné.

3. Unité d'alignement (100) selon la revendication 1 ou la revendication 2, qui comprend en outre
   une mémoire (70) dans laquelle une différence de moments d'entraînement desdits premier et second détecteurs d'image (121, 122) est stockée à l'avance.

4. Unité d'alignement (100) selon l'une quelconque des revendications 1 à 3, dans laquelle

lesdits premier et second signaux de commande peuvent sélectivement devenir n'importe lequel d'un signal de fin de veille, d'un signal de mise en veille, d'un signal de réinitialisation, et d'une commande SIO.

5. Unité d'alignement (100) selon l'une quelconque des revendications 1 à 3, dans laquelle lesdits premier et second signaux de commande sont sélectivement réglés sur « actif-élevé » ou « actif-faible ».

6. Unité d'alignement (100) selon l'une quelconque des revendications 1 à 3, dans laquelle :

ledit processeur de signal d'image (140) émet une erreur lorsqu'une différence de synchronisation de l'image fournie par lesdits premier et second détecteurs d'image (121, 122) est égale ou supérieure à une certaine valeur ;
lors de l'émission de ladite erreur, une valeur de détection d'erreur peut être désignée depuis l'extérieur.

7. Dispositif d'imagerie (100) qui comprend :

l'unité d'alignement (100) selon l'une quelconque des revendications 1 à 6 ;
un système optique (20) adapté pour imager un sujet ; et
un détecteur d'image (30) adapté pour convertir une image optique obtenue par ledit système optique (20) en un signal électrique.

# FIG. 1

# FIG. 2

# FIG. 3

# FIG. 4

START

S10
EXPOSURE CONTROL

S20
PHASE DIFFERENCE
DETECTING AF

S30
AF DETERMINATION — NO

YES S40
CONTRAST AF

S50
AF DETERMINATION — NO

YES S60
DISPLAY SUCCESS

S70
FAILURE
DETERMINATION
NO — YES

S80
FAILURE
DETERMINATION
NO — YES

S90
DISPLAY ERROR

END

# FIG. 5

100

10 MAIN CONTROLLER

# FIG. 6

# FIG. 7

# FIG. 8

```
START
  │
  ▼
CHECK STABILITY          ─ S101
OF POWER SUPPLY
  │
  ▼
SUPPLY DRIVE             ─ S102
CLOCK TO SECOND
IMAGE SENSOR
  │
  ▼
INITIALIZE FIRST AND     ─ S103
SECOND IMAGE SENSORS
  │
  ▼
CALCULATE TIME L         ─ S104
  │
  ▼
TIME L IS A HALF         ─ S105      YES
FRAME OR MORE?  ──────────────────────┐
  │ NO                                 │
  ▼                                    ▼
CALCULATE TIME M  ─ S106      CALCULATE TIME N  ─ S110
  │                                    │
  ▼                                    ▼
TIME L+M=1 FRAME?  ─ S107      TIME L+N=1 FRAME?  ─ S111
  │ NO (left)  │ YES            │ YES          │ NO (right)
  │            ▼ S108           ▼ S112         │
  │   ADVANCE DRIVE START   ADVANCE DRIVE START │
  │   TIMING OF SECOND IMAGE TIMING OF FIRST IMAGE │
  │   SENSOR BY TIME L      SENSOR BY TIME N    │
  ▼                                             ▼
NOTIFY MAIN                              NOTIFY MAIN
CONTROLLER   S109                        CONTROLLER   S113
OF ERROR                                 OF ERROR
  │            │              │            │
  └────────────┴──── END ─────┴────────────┘
```

## FIG. 9

POWER SUPPLY

EXCLK (COMMON)

AF1_RESET

AF1_SIO — PLL LOCK TIME

DEFAULT SETTING

AF1_Sleep/Standby

AF1_VD

AF1_HD

VDATA1[7:0] — 1 2 3 ··· m m+1 m+2

AF2_RESET — PLL LOCK TIME

AF2_SIO

DEFAULT SETTING

TIME L

AF2_VD

AF2_HD

VDATA2[7:0] — 1 2

count_clk

ING_OUT_CNT1[15:0] — 0 | COUNT UP | L

TMG_GAP1[15:0] — 0 | L

EP 2 461 572 B1

# FIG.10

POWER SUPPLY

EXCLK (COMMON)

AF1_RESET

AF1_SIO

AF1_Sleep/Standby

AF1_VD

TIME M

AF1_HD

VDATA1[7:0]  (n-1)(n)  (1)(2)

AF2_RESET

AF2_SIO

AF2_VD

AF2_HD

VDATA2[7:0]  (1)(2)(3)  (m)(m+1)(m+2)

count_clk

ING_OUT_CNT2[15:0]  0  COUNT UP  M

TMG_GAP2[15:0]  0  M

EP 2 461 572 B1

## FIG.11

POWER SUPPLY

EXCLK (COMMON)

AF1_RESET

AF1_SIO

AF1_Sleep/Standby

AF1_VD

AF1_HD

VDATA1 [7:0]

AF2_RESET

AF2_SIO

AF2_VD

AF2_HD

VDATA2[7:0]

count_clk

ING_OUT_CNT2[15:0]

TMG_GAP2[15:0]

TIME N

| | 0 | COUNT UP | N |

| | 0 | | N |

EP 2 461 572 B1

# FIG.12

AF1_RESET

PLL LOCK TIME

AF1_SIO

DEFAULT SETTING

AF1_Sleep/Standby

TMG_GAP1[15:0]

AF1_VD

AF1_HD

VDATA1[7:0]  ⟨1⟩⟨2⟩

count_clk

GAP_CRT_CNT[15:0]  | 0 | COUNT UP | 0 |

AF2_RESET

PLL LOCK TIME

AF2_SIO

DEFAULT SETTING

AF2_Sleep/Standby

AF2_VD

AF2_HD

VDATA2[7:0]  ⟨1⟩⟨2⟩⟨3⟩⟨4⟩⟨5⟩⟨6⟩⟨7⟩⟨8⟩

EP 2 461 572 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001221945 A
- JP 2006072384 A
- US 4178098 A
- JP 2001249267 A